# EUROPEAN PATENT SPECIFICATION

(11) **EP 2 493 148 B1**
(45) Date of publication and mention of the grant of the patent: **19.06.2019**
(21) Application number: 11156261.7
(22) Date of filing: 28.02.2011
(51) Int. Cl.: H04L 29/08

(54) **Wireless communications system providing media content based upon near field communication (NFC) communicated preference information and related methods**
Drahtloses Kommunikationssystem zur Bereitstellung von Medieninhalt auf Grundlage von über Nahfeldkommunikation übertragene Präferenzinformationen und zugehörige Verfahren
Système de communications sans fil fournissant un contenu média basé sur la communication de champ proche, informations de préférence communiquées et procédés apparentés

(43) Date of publication of application: 29.08.2012
(73) Proprietor: BlackBerry Limited, Waterloo, ON N2K 0A7 (CA)
(72) Inventor: Hill, Thomas Casey, Rolling Meadows, IL 60008 (US)
(74) Representative: Noble, Nicholas

(56) References cited:
- US-A1- 2006 008 256
- US-A1- 2010 082 821
- US-A1- 2010 130 125

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

US 2010/0130125 describes an apparatus for analyzing data associated with proximate devices that may include a processor. The processor may be configured to detect that a first device is proximate to a second device and receive indications of active data directly from the first device. The processor may also be configured to perform an analysis of the indications of active data and cause a user interface to present results of the analysis.

US 2010/0082821 describes systems, methods, and devices for performing a workflow with two or more electronic devices. Embodiments include an initiator electronic device that may function to control the workflow and send instructions for executing the workflow to a target electronic device. The initiator device may generate instructions for the workflow based on properties received from the target device. The instructions generated by the initiator may allow both devices to accomplish a shared goal, such as exchanging contact information. In some embodiments, the initiator device may include a graphical user interface for creating workflows, downloading workflows from a web service, and entering preferences governing the performance of the workflows.

The invention is defined in the appended independent claims.

### Brief Description of the Drawings

FIG. 1 is a schematic block diagram of a wireless communications system in accordance with an example embodiment.
FIG. 2 is another schematic block diagram of the wireless communications system of FIG. 1 including the display of the mobile device and the electronic device.
FIG. 3 is a schematic diagram of a wireless communications system in accordance with another example embodiment.
FIG. 4 is a flow diagram illustrating example method aspects associated with the system and device of FIGS. 1-2.
FIG. 5 is a schematic block diagram illustrating example components of a mobile wireless communications device that may in accordance with various implementations.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a wireless communications system is disclosed herein which may include a first near field communication (NFC) device and a player device configured to play media content. The wireless communications system may also include at least one mobile wireless communications device including a second NFC device configured to communicate with the first NFC device based upon proximity, and a controller cooperating with the second NFC device and configured to transmit preference play information to the electronic device via the first NFC device. The player device may be configured to play selected media content based upon the preference play information.

The at least one wireless communications device may include a plurality of wireless communications devices. The player device may be configured to play selected media content based upon preference play information from each of the plurality of mobile wireless communications devices, for exmaple.

The player device may be configured to play a plurality of media content channels. The preference play information may include channel preference information. The player device may be configured to play a subset of the plurality of media content channels based upon the channel preference information, for example.

The player device may be configured to play a plurality of media content belonging to at least one of a plurality of categories, for example. The preference play information may include category preference information. The player device may be configured to play selected categories of the media content based upon the category preference information.

The player device may be an audio receiver. The audio receiver may be configured to play a plurality of audio channels. The audio receiver may be configured to play selected audio channels based upon the preference play information, for example.

The player device may include a video receiver. The video receiver may be configured to play a plurality of video channels. The video receiver may be configured to play selected video channels based upon the preference play information.

The player device may include an audio playback device, for example. The audio playback device may be configured to provide a plurality of stored digital audio files. The audio playback device may be configured to play back selected audio files based upon the preference play information. The selected audio files may define an audio playlist, for example.

The player device may include a video playback device. The video playback device may be configured to provide a plurality of stored digital video files. The audio playback device may be configured to play back selected video files based upon the preference play information, for example.

The at least one mobile wireless communications device may include an input device coupled to the controller. The controller may be configured to cooperate with the input device to select the preference play information, for example.

An electronic device, similar to the one described briefly above, and a method for using the electronic device are also provided. The method may include receiving preference play information via the first NFC device from the at least one wireless communications device and playing selected media content using the player device based upon the preference play information, for example.

A related non-transitory computer-readable medium for use with a mobile wireless communications device, such as the one described briefly above, may have computer-executable instructions for causing the mobile wireless communications device to perform various steps. The steps may include receiving preference play information via the first NFC device from at least one wireless communications device comprising a second NFC device and a controller cooperating with the second NFC device and configured to transmit the preference play information to the first NFC device based upon proximity with the second NFC device. The steps may also include playing selected media content using the player device based upon the preference play information, for example.

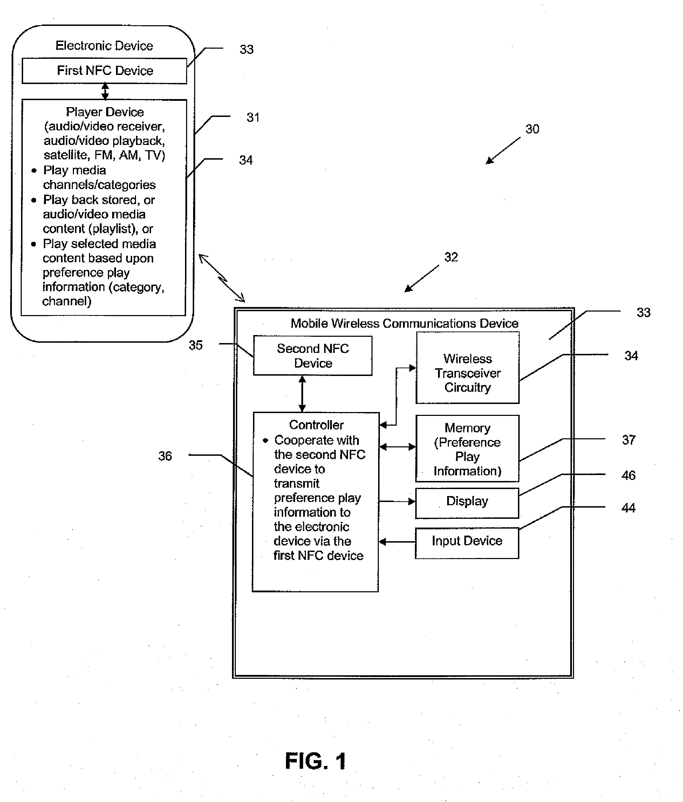

Referring initially to FIGS. 1-2, a wireless communications system **30** is first described. The system **30** illustratively includes an electronic device **31** that includes a first near field communication (NFC) device **33.**

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The electronic device **31** also includes a player device **34** configured to play media content. The player device **34** may play stored media content, may stream media content, or may play live broadcast media content. The player device **34** may play other types of media content.

The system **30** also includes a mobile wireless communications device **32** (also referred to as a "mobile device" herein). Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

The mobile device **32** illustratively includes a portable housing **33** and wireless transceiver circuitry **34** carried by the portable housing. The wireless transceiver circuitry **34** may be cellular transceiver circuitry or other type of wireless communications circuitry (e.g., Wifi, Wimax, etc.), and may communicate any combination of voice and data, such as, for example, email.

The mobile device **32** includes a display **46** carried by the portable housing **33.** The display **46** may be a liquid crystal display (LCD) and may be configured to display information relating to data or voice communications. The display **46** may be in the form of an active display that includes a backlight, for example. The display **46** may display email information, contact information, or call information. The display **46** may be another type of display, for example, a passive display, and may display other information.

The mobile device **32** also includes a controller, or processor, **36** that is carried by the portable housing **33** and coupled to the wireless transceiver circuitry **34** and the display **46.** The controller **35** may be implemented using hardware (e.g., memory, etc.) and software components, i.e., computer-readable instructions for causing the mobile device **32** to perform the various functions or operations described herein.

The mobile device **32** includes a second NFC device **35** configured to communicate with the first NFC device **33** based upon proximity and cooperating with the controller **36.** The controller **36** is configured to transmit preference play information to the electronic device **31** via the first NFC device **33.**

The mobile device may include a memory **37** coupled to the controller **36.** The preference play information may be stored in the memory **37.** The preference play information may be downloaded from a remote computer, for example, a desktop computer (not shown), or wirelessly, for example, via the second NFC device **35,** from another mobile device (not shown). The preference play information may be downloaded from other sources. Preference play information may include desired (e.g. favorite) categories, for example, genres of songs, artists, actors, date released, date downloaded, playlist information, etc. Preference play information may also include listening preferences, for example, volume, bass, treble, etc.

The mobile device **32** also includes an input device **44.** The mobile device **32** may include more than one input device. The preference play information may, alternatively or additionally, be entered into the memory **37** via the input device **44.** The player device **34** plays selected media content based upon the preference play information.

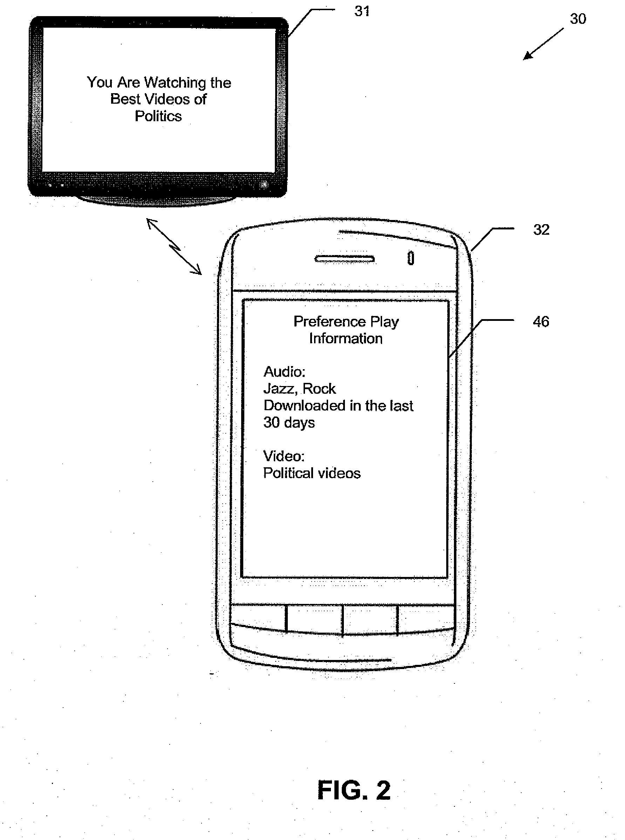

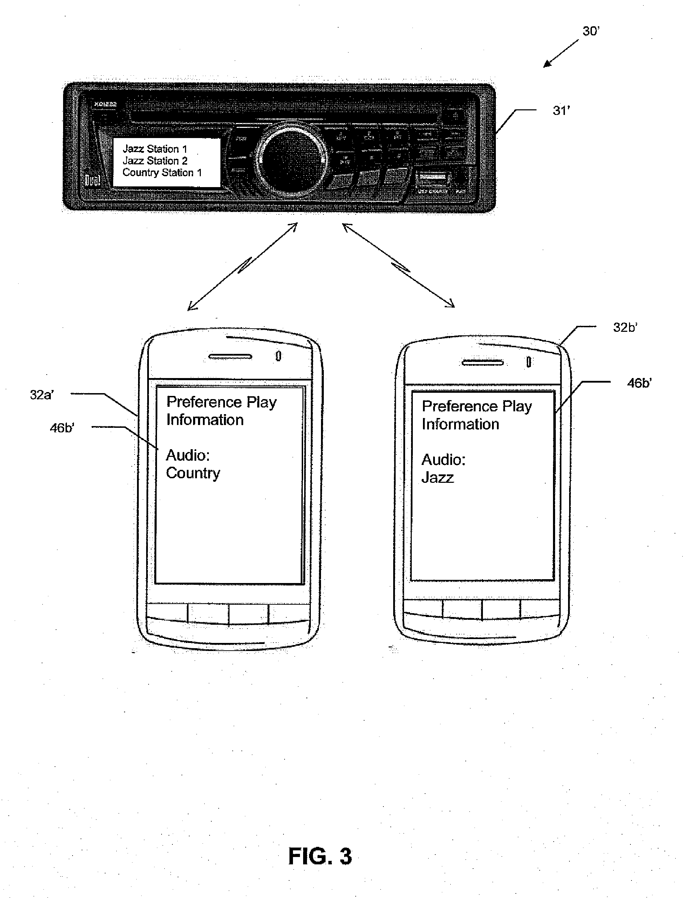

By way of example, the player device **34** may be an audio receiver (See FIG. 3), a video receiver (See FIG. 2), or may receive both audio and video and be configured to play a plurality of media content channels. Media content channels may include one or more of audio and video channels, for example, FM or AM radio stations, TV stations, Internet radio or video stations, and satellite radio stations. The preference play information may include channel preference information, such as a subset of the available channels. The preference play information may include, for example, a listing of favorite stations. The player device **34** plays the subset of available media content channels based upon the channel preference information. In particular, the player device **34** may present the subset of channels as presets that may be selected for play back. Each of the subset of available media content channels may be selectable from the input device, for example.

In another example, the player device **34** may be configured to play media content belonging to at least one category. In such case, the preference play information includes category preference information, for example, a station type, a music genre, etc. The player device **34** plays the selected categories of the media content based upon the category preference information. For example, the media content belonging to a particular genre may be played by the player device **34.** The media content may belong to more than one category, and the player device **34** may play the media content that belongs to the selected categories, or may present the different categories as presets. Additionally, the categories may be selectable via the input device **44,** for example. The categories may be selected in other ways, for example via NFC communications, or downloaded via a wired or wireless network.

More particularly, in the illustrated example in FIG. 2, the preference play information includes preference play information for political videos. The preference play information for political videos is communicated to the video player device **34.** The video player device **34** advantageously plays videos that are politically based, for example.

In still another example, the player device **34** may be a video playback device, for example, a movie player. The video playback device plays back digital video files, for example, movies or videos. The digital video files may be stored may be stored on a player device memory (not shown), for example, or may be stored in another memory, for example in another device (Internet server, etc.). The video playback device **34** plays back selected video files based upon the preference play information, for example, to define a video playlist.

By way of example, the preference play information may include a favorite actor. The video playback device plays, or may provide for playing, videos that have the favorite actor in it. Other types of preference play information may be used to select the video files.

In yet another example, the player device **34** may be an audio playback device, for example, an audio playback device or an MP3 player or other digital music player. The audio playback device **34** plays back stored digital audio files. The digital audio files may be stored on a player device memory (not shown), for example, or may be stored in another memory, for example in another device. The audio playback device **34** plays selected ones of the stored audio files based upon the preference play information. In other words, the selected audio files may define an audio playlist that is played back.

By way of example, the preference play information may include top five favorite bands. The audio playback device **34** plays, or may provide for playing, selected songs that are performed by the top five favorite bands. Other types of preference play information may be used to select the digital audio files.

It should be noted that while several examples of media content, preference play information, and player devices **34** have been described above, a single player device may play both stored media content and media content channels. A single player device may also play both video and audio from any of a number of sources. Alternatively, more than one player device may be included to each perform certain functions, for example, play live, streaming or broadcast video or audio, or play back stored video or audio, and to each play a given type of media content.

Referring now to FIG. 3, in another embodiment, the system **30'** includes a pair of mobile devices **32a', 32b'.** Of course, more than two mobile devices may be used. The player device **34'** is configured to play selected media content based upon the preference play information from each mobile device **32a', 32b'.** By way of example, suppose Bob and Jane enter a vehicle (e.g., a rental vehicle), each carrying their respective mobile device **32a', 32b'** and wish to set their vehicle's MP3 player or player device **34'.** Bob and Jane each place their respective mobile device **32a', 32b'** in proximity with the first NFC device **33.** Their respective preference play information, for example, country and jazz, is transmitted to the MP3 player **34'** via the first NFC device **33.** The MP3 player **34'** selects songs from their stored library that meet their respective play preferences, i.e. country and jazz. In other words, the MP3 player **34'** selects and plays only songs in the country and jazz genres. Still further, should Bob and Jane choose to take along their children, the MP3 player **34'** may also select and play songs that also meet their play preferences.

While the preference play information in the present example is different for each mobile device **32a', 32b',** the preference play information may be the same as or overlapping with other mobile devices in some embodiments. Moreover, while the player device **34'** in the present example is an MP3 audio player, the player device may be another type of player device and may be configured to play or play back more than one or other types of media content, for example, as described above.

Additionally, in another example embodiment, the controller **36** of the mobile device **32** may cooperate with the second NFC device **35** to communicate preference play information to first and second electronic devices **31a, 31b,** each having a respective first NFC device **33a, 33b.** By way of example, the mobile device **32** may be "bumped" with a home television **31a.** The preference play information, for example, channel preference information, is communicated to the home television **31a.** The same mobile device **32** may also communicate the same channel preference information when "bumped" with a hotel television **31b,** for example, when on the road. In some example embodiments, the home television **31a** may transmit preference play information to the mobile device **32,** which in turn may transmit the preference play information to the hotel television **31b.**

Still further, in another example embodiment, either one or both of the mobile device **30** and the electronic device **31** may save historical preference information, for example, in a respective memory. The saved preference information may be combined, reconciled, or otherwise used as a basis for deriving the preference play information to be transmitted.

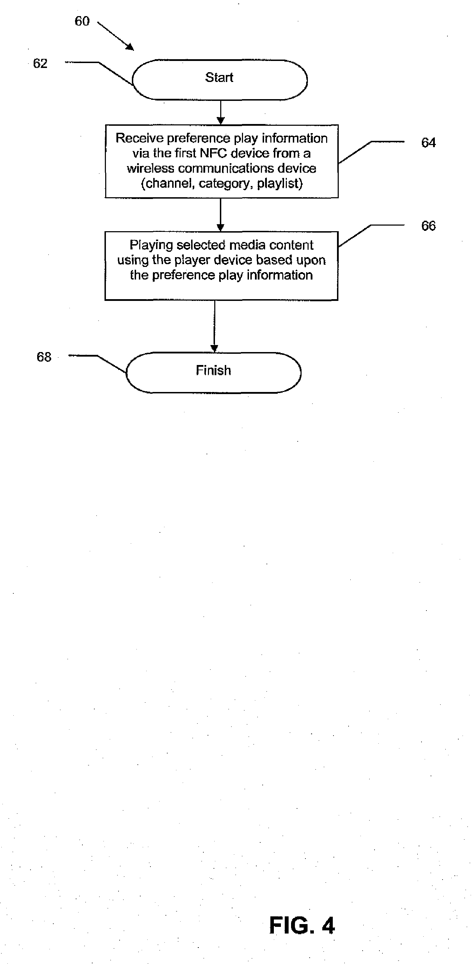

Referring to the flow diagram **60** in FIG. 4, an example method aspect is now described. Beginning at Block **62** a method of using an electronic device **31** that includes a first NFC device **33** and a player device **34** configured to play media content. The method includes, at Block **64,** receiving preference play information via the first NFC device **33** from a mobile wireless communications device **32.** The mobile wireless communications device **32** includes a second NFC device **35** and a controller **36** cooperating with the second NFC device to transmit the preference play information to the first NFC device **33** based upon proximity with the second NFC device. At Block **66,** the method includes playing selected media content using the player device **34** based upon the preference play information. The method ends at Block **68.**

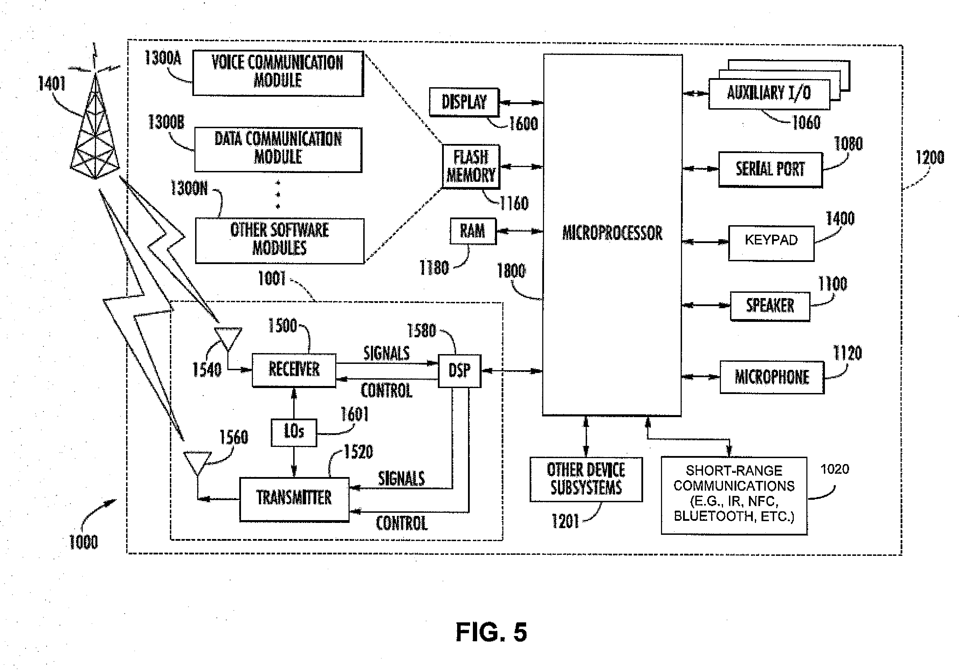

Example components of a mobile wireless communications device **1000** that may be used in accordance with the above-described embodiments are further described below with reference to FIG. 5. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A wireless communications system (30) comprising:
an electronic device (31) comprising a first near field communication "NFC" device (33) and a player device (34) configured to play media content; and
at least one mobile wireless communications device (32) comprising
a second NFC device (35) configured to communicate with said first NFC device based upon proximity, and
a controller (36) cooperating with said second NFC device and configured to transmit channel preference information to said electronic device via said first NFC device;
said player device being configured to play selected media content based upon the channel preference information.

2. The system (30) of Claim 1 wherein said at least one mobile wireless communications device (32) comprises a plurality of wireless communications devices; and wherein said player device (34) is configured to play selected media content based upon channel preference information from each of said plurality of mobile wireless communications devices.

3. The system (30) of Claim 1 wherein said player device (34) is configured to play a plurality of media content channels; and wherein said player device is configured to play a subset of the plurality of media content channels based upon the channel preference information.

4. The system (30) of Claim 1 wherein said player device (34) comprises an audio receiver; wherein said audio receiver is configured to play a plurality of audio channels; and wherein said audio receiver is configured to play selected audio channels based upon the channel preference information.

5. The system (30) of Claim 1 wherein said player device (34) comprises a video receiver; wherein said video receiver is configured to play a plurality of video channels; and wherein said video receiver is configured to play selected video channels based upon the channel preference information.

6. An electronic device for communicating with at least one mobile wireless communications device, the electronic device comprising:
a near field communication "NFC" device configured to receive, via "NFC", channel preference information from the at least one mobile wireless communications device based upon proximity; and
a player device cooperating with said NFC device and configured to play selected media content based upon the channel preference information.

7. The electronic device of Claim 6 wherein said player device is configured to play selected media content based upon channel preference information from each of said plurality of mobile wireless communications devices.

8. The electronic device of Claim 6 wherein said player device is configured to play a plurality of media content channels; and wherein said player device is configured to play a subset of the plurality of media content channels based upon the channel preference information.

9. A method of using an electronic device comprising a near field communication "NFC" device and a player device configured to play media content, the method comprising:
receiving channel preference information via the NFC device from at least one wireless communications device based upon proximity; and
playing selected media content using the player device based upon the channel preference information.

10. The method of Claim 9 wherein the player device plays the selected media content based upon channel preference information from each of the plurality of mobile wireless communications devices.

11. The method of Claim 9 wherein the player device is configured to play a plurality of media content channels; and wherein the player device plays a subset of the plurality of media content channels based upon the channel preference information.

## Patentansprüche

1. Drahtloses Kommunikationssystem (30), umfassend:
eine elektronische Vorrichtung (31) mit einer ersten Nahfeldkommunikations-"NFC" Vorrichtung (33) und einer Abspielvorrichtung (34), die konfiguriert ist, um Medieninhalte wiederzugeben; und
mindestens eine mobile drahtlose Kommunikationsvorrichtung (32) mit
einer zweiten NFC-Vorrichtung (35), die konfiguriert ist, um mit der ersten NFC-Vorrichtung bezogen auf die nähere Umgebung zu kommunizieren, und
einer Steuereinheit (36), die mit der zweiten NFC-Vorrichtung zusammenwirkt und konfiguriert ist, um Kanalpräferenzinformationen über die erste NFC-Vorrichtung an die elektronische Vorrichtung zu übertragen;
wobei die Abspielvorrichtung konfiguriert ist, um ausgewählte Medieninhalte auf der Grundlage den Kanalpräferenzinformationen wiederzugeben.

2. System (30) nach Anspruch 1, wobei die mindestens eine mobile drahtlose Kommunikationsvorrichtung (32) eine Vielzahl von drahtlosen Kommunikationsvorrichtungen umfasst; und wobei die Abspielvorrichtung (34) konfiguriert ist, um ausgewählte Medieninhalte auf der Grundlage der Kanalpräferenzinformationen von jeder der Vielzahl von mobilen drahtlosen Kommunikationsvorrichtungen wiederzugeben.

3. System (30) nach Anspruch 1, wobei die Abspielvorrichtung (34) konfiguriert ist, um eine Vielzahl von Medieninhaltskanälen wiederzugeben; und wobei die Abspielvorrichtung konfiguriert ist, um eine Untergruppe der Vielzahl von Medieninhaltskanälen auf der Grundlage der Kanalpräferenzinformationen wiederzugeben.

4. System (30) nach Anspruch 1, wobei die Abspielvorrichtung (34) einen Audioempfänger umfasst; wobei der Audioempfänger konfiguriert ist, um eine Vielzahl von Audiokanälen wiederzugeben; und wobei der Audioempfänger konfiguriert ist, um ausgewählte Audiokanäle auf der Grundlage der Kanalpräferenzinformationen wiederzugeben.

5. System (30) nach Anspruch 1, wobei die Abspielvorrichtung (34) einen Videoempfänger umfasst; wobei der Videoempfänger konfiguriert ist, um eine Vielzahl von Videokanälen wiederzugeben; und wobei der Videoempfänger konfiguriert ist, um ausgewählte Videokanäle auf der Grundlage der Kanalpräferenzinformationen wiederzugeben.

6. Elektronische Vorrichtung zum Kommunizieren mit mindestens einer mobilen drahtlosen Kommunikationsvorrichtung, wobei die elektronische Vorrichtung umfasst:
eine Nahfeldkommunikations- "NFC" Vorrichtung, die konfiguriert ist, um über "NFC" Kanalpräferenzinformationen von der mindestens einen mobilen drahtlosen Kommunikationsvorrichtung bezogen auf die nähere Umgebung zu empfangen; und
eine Abspielvorrichtung, die mit der NFC-Vorrichtung zusammenwirkt und konfiguriert ist, um ausgewählte Medieninhalte auf der Grundlage der Kanalpräferenzinformationen wiederzugeben.

7. Elektronische Vorrichtung nach Anspruch 6, wobei die Abspielvorrichtung konfiguriert ist, um ausgewählte Medieninhalte auf der Grundlage von Kanalpräferenzinformationen von jeder der Vielzahl von mobilen drahtlosen Kommunikationsvorrichtungen wiederzugeben.

8. Elektronische Vorrichtung nach Anspruch 6, wobei die Abspielvorrichtung konfiguriert ist, um eine Vielzahl von Medieninhaltskanälen wiederzugeben; und wobei die Abspielvorrichtung konfiguriert ist, um eine Untergruppe der Vielzahl von Medieninhaltskanälen auf der Grundlage der Kanalpräferenzinformationen wiederzugeben.

9. Verfahren zum Verwenden einer elektronischen Vorrichtung mit einer Nahfeldkommunikations- "NFC" Vorrichtung und einer Abspielvorrichtung, die konfiguriert ist, um Medieninhalte wiederzugeben, wobei das Verfahren umfasst:
Empfangen von Kanalpräferenzinformationen über die NFC-Vorrichtung von mindestens einer drahtlosen Kommunikationsvorrichtung bezogen auf die nähere Umgebung; und
Wiedergeben ausgewählter Medieninhalte über die Abspielvorrichtung auf der Grundlage der Kanalpräferenzinformationen.

10. Verfahren nach Anspruch 9, wobei die Abspielvorrichtung den ausgewählten Medieninhalt auf der Grundlage von Kanalpräferenzinformationen von jeder der Vielzahl von mobilen drahtlosen Kommunikationsvorrichtungen wiedergibt.

11. Verfahren nach Anspruch 9, wobei die Abspielvorrichtung konfiguriert ist, um eine Vielzahl von Medieninhaltskanälen wiederzugeben; und wobei die Abspielvorrichtung eine Untergruppe der Vielzahl von Medieninhaltskanälen auf der Grundlage der Kanalpräferenzinformationen wiedergibt.

## Revendications

1. Système de communication sans fil (30) comprenant :
un dispositif électronique (31) comprenant un premier dispositif de communication en champ proche « NFC » (33) et un dispositif de lecture (34) configuré pour lire un contenu multimédia ; et
au moins un dispositif de communication sans fil mobile (32) comprenant :
un deuxième dispositif NFC (35) configuré pour communiquer avec ledit premier dispositif NFC sur la base de la proximité, et
une unité de commande (36) coopérant avec ledit deuxième dispositif NFC et configurée pour transmettre des informations de préférence de canal audit dispositif électronique par l'intermédiaire dudit premier dispositif NFC ;
ledit dispositif de lecture étant configuré pour lire un contenu multimédia sélectionné sur la base des informations de préférence de canal.

2. Système (30) de la revendication 1, dans lequel ledit au moins un dispositif de communication sans fil mobile (32) comprend une pluralité de dispositifs de communication sans fil ; et dans lequel ledit dispositif de lecture (34) est configuré pour lire un contenu multimédia sélectionné sur la base des informations de préférence de canal provenant de chacun de ladite pluralité de dispositifs de communication sans fil mobiles.

3. Système (30) de la revendication 1, dans lequel ledit dispositif de lecture (34) est configuré pour lire une pluralité de canaux de contenu multimédia ; et dans lequel ledit dispositif de lecture est configuré pour lire un sous-ensemble de la pluralité de canaux de contenu multimédia sur la base des informations de préférence de canal.

4. Système (30) de la revendication 1, dans lequel ledit dispositif de lecture (34) comprend un récepteur audio ; dans lequel ledit récepteur audio est configuré pour lire une pluralité de canaux audio ; et dans lequel ledit récepteur audio est configuré pour lire des canaux audio sélectionnés sur la base des informations de préférence de canal.

5. Système (30) de la revendication 1, dans lequel ledit dispositif de lecture (34) comprend un récepteur vidéo ; dans lequel ledit récepteur vidéo est configuré pour lire une pluralité de canaux vidéo ; et dans lequel ledit récepteur vidéo est configuré pour lire des canaux vidéo sélectionnés sur la base des informations de préférence de canal.

6. Dispositif électronique pour communiquer avec au moins un dispositif de communication sans fil mobile, le dispositif électronique comprenant :
un dispositif de communication en champ proche « NFC » configuré pour recevoir, par l'intermédiaire d'une communication en champ proche « NFC », des informations de préférence de canal à partir de l'au moins un dispositif de communication sans fil mobile sur la base de la proximité ; et
un dispositif de lecture coopérant avec ledit dispositif NFC et configuré pour lire un contenu multimédia sélectionné sur la base des informations de préférence de canal.

7. Dispositif électronique de la revendication 6, dans lequel ledit dispositif de lecture est configuré pour lire un contenu multimédia sélectionné sur la base des informations de préférence de canal provenant de chacun de ladite pluralité de dispositifs de communication sans fil mobiles.

8. Dispositif électronique de la revendication 6, dans lequel ledit dispositif de lecture est configuré pour lire une pluralité de canaux de contenu multimédia ; et dans lequel ledit dispositif de lecture est configuré pour lire un sous-ensemble de la pluralité de canaux de contenu multimédia sur la base des informations de préférence de canal.

9. Procédé d'utilisation d'un dispositif électronique comprenant un dispositif de communication en champ proche « NFC » et un dispositif de lecture configuré pour lire un contenu multimédia, le procédé comprenant les étapes consistant à :
recevoir des informations de préférence de canal par l'intermédiaire du dispositif NFC à partir d'au moins un dispositif de communication sans fil sur la base de la proximité ; et
lire un contenu multimédia sélectionné en utilisant le dispositif de lecture sur la base des informations de préférence de canal.

10. Procédé de la revendication 9, dans lequel le dispositif de lecture lit le contenu multimédia sélectionné sur la base des informations de préférence de canal provenant de chacun de la pluralité de dispositifs de communication sans fil mobiles.

11. Procédé de la revendication 9, dans lequel le dispositif de lecture est configuré pour lire une pluralité de canaux de contenu multimédia ; et dans lequel le dispositif de lecture lit un sous-ensemble de la pluralité de canaux de contenu multimédia sur la base des informations de préférence de canal.
